# EUROPÄISCHE PATENTANMELDUNG

(11) **EP 1 892 074 A1**
(43) Veröffentlichungstag der Anmeldung: **27.02.2008**
(21) Anmeldenummer: 06119380.1
(22) Anmeldetag: 23.08.2006
(51) Int. Cl.: B29C 45/16, B29C 45/73, B29C 33/02

(54) **Verfahren und Spritzgießmaschine zum Mehrkomponentenspritzgießen, sowie Formteil bestehend aus mehreren Komponenten**

(71) Anmelder: Elast Kunststoffverarbeitungs-GmbH & Co. KEG, 4730 Heiligenberg (AT)
(72) Erfinder: Manigatter, Kurt, 4072 Alkoven (AT); Reslhuber, Christian, 4491 Niederneukirchen (AT); Fattinger, Paul, 4730 Heiligenberg (AT); Adlesgruber, Karl, 4511 Allhaming (AT)
(74) Vertreter: Staudt, Armin Walter

(57) **Zusammenfassung**

Bei einem bekannten Verfahren zum Zweikomponenten-Spritzgießen von Kunststoff-Spritzgussteilen werden aus zwei oder mehr spritzgießbaren Materialien oder Materialiengruppen in zwei oder mehr Spritzschritten in einer Spritzform Formteile hergestellt, wobei die einzelnen Spritzschritte im wesentlichen simultan in den einzelnen Spritzstationen ausgeführt werden. Um aufbauend auf diesem Prinzip ein Verfahren zu schaffen, mit welchem die Herstellung eines Formteils ermöglicht wird, welches aus zwei oder mehr Kunststofftypen besteht, die jeweils bei erheblich unterschiedlichen Temperaturen verarbeitet werden, wird erfindungsgemäß vorgeschlagen, dass jeder Spritzstation (1,2) eine separate Versorgungseinrichtung (14) für einen bestimmten Kunststoff zugeordnet ist, und je nach zu verarbeitendem Kunststoff die Spritzstation (1,2) von der Versorgungseinrichtung (14) bzw. die Versorgungseinrichtung, beispielsweise eine Plastifiziereinrichtung, vom Maschinengehäuse thermisch isoliert und mittels eigener Temperier- bzw. Kühlkreise (11,12,20,21,22) unterschiedlich temperiert ist, dass der quaderförmige Träger (6) von den daran aufgespannten Formplatten (7) thermisch isoliert ist, und der quaderförmige Träger (6) sowie die Formplatten (7) mittels eigener Temperier-bzw. Kühlkreise (9,10) unterschiedlich temperiert sind, und dass in den am quaderförmigen Träger aufgespannten Formplatten (7) im wesentlichen konstante Temperaturen herrschen.

## Beschreibung

Die vorliegende Erfindung betrifft ein Verfahren zum Spritzgießen und eine Spritzgießmaschine zum Mehrkomponentenspritzgießen, sowie ein Formteil, das zwei Komponenten umfasst und mittels dem erfindungsgemäßen Verfahren und der erfindungsgemäßen Spritzgießmaschine hergestellt ist.

Für viele Anwendungen des Spritzgießverfahrens ist es vorteilhaft, wenn die Spritzgießform oder eine Hälfte derselben relativ zur Spritzgießmaschine drehbar ist. Mit einer solchen drehbaren Form besteht beispielsweise die Möglichkeit, zu verarbeitende Kunststoffschmelze aus mehreren, typischerweise aus zwei gegenüberliegenden Einspritzstationen in die Form einzuspritzen. Damit können erstens Formteile mit verschiedenen Geometrien, verschiedenen Farben oder aus verschiedenen Materialien hergestellt werden. Damit können zweitens auch Formteile aus mehreren Komponenten hergestellt werden, nach dem sogenannten Mehrkomponentenverfahren, also Formteile, welche verschiedene Farben aufweisen oder aus mehreren Materialien bestehen.

Wenn nur eine Einspritzstation verwendet wird, bringt eine drehbare Form den Vorteil von schnelleren Zykluszeiten. Nach einem ersten Einspritzzyklus kann nämlich die Form gedreht werden und die soeben eingespritzten Formteile können abkühlen und ausgestoßen werden, während bereits ein zweiter Einspritzzyklus stattfindet. Bei drehbaren Formen stehen überdies mehr Kavitäten zur Verfügung als bei nicht drehbaren Formen. Außerdem erlauben drehbare Formen Zwischenstationen für verschiedene Operationen.

Spritzgießmaschinen, bei denen verschiedene Kunststoffarten desselben Basistyps in dasselbe Werkzeug gespritzt werden, sind hinlänglich bekannt. So offenbart beispielsweise die US 4,330,257 A eine Spritzgießmaschine mit zwei relativ zueinander beweglichen Formaufspannplatten und einem dazwischen liegenden Kernträgerkörper, welcher mindestens vier Seitenflächen hat und um eine Achse senkrecht zur Bewegungsrichtung der Formaufspannplatten drehbar ist. Auf beiden Formaufspannplatten befinden sich erste Formhälften mit formgebenden Hohlräumen. Die Seitenflächen des Kernträgerkörpers bilden die zweite Formhälfte. Werden die beiden Formaufspannplatten gegen den Kernträgerkörper gepresst, so werden die ersten und zweiten Formhälften zu Formen zusammengefügt, in welche aus zwei Einspritzstationen Schmelze eingespritzt wird. Nach dem Öffnen der Formhälften werden die so entstandenen Formteile mittels sogenannten Fingern aus den Hohlräumen entfernt.

Die DE 36 20 175 A1 offenbart eine Spritzgießmaschine mit mindestens zwei Plastifizier- und Einspritzeinheiten und zwei Formaufspannplatten. Die eine Formaufspannplatte ist fest, die andere auf Holmen verschiebbar. Zwischen den Formaufspannplatten befindet sich ein drehbarer und ebenfalls verschiebbarer prismatischer Kernträgerkörper. Auf den Formaufspannplatten befinden sich erste, auf dem Kernträgerkörper zweite Formhälften der Spritzgießformen. Durch Verschieben der verschiebbaren Formaufspannplatte und des Kernträgerkörpers werden die ersten und zweiten Formhälften zu einer Spritzgießform zusammengefügt.

Zum Mehrkomponentenspritzgießen von Kunststoffspritzteilen sind außerdem sogenannte Wendewerkzeuge bekannt. Diese Wendewerkzeuge bestehen aus zwei Werkzeughälften, zwischen welchen Formenhohlräume ausgebildet sind und wobei die beiden Werkzeughälften auseinanderfahrbar sowie schließbar sind. So beschreibt die DE 10 2004 058 973 A1 eine gattungsgemäße Vorrichtung, bei der in der einen Werkzeughälfte eine im wesentlichen quaderförmige Umsetzeinrichtung integriert ist. Diese ist aus dieser Werkzeughälfte längsverschiebbar ausfahrbar, anschließend um eine horizontale Achse drehbar sowie schließlich wieder in der Werkzeughälfte versenkbar. Nachdem die erste Komponente gespritzt worden ist, werden die Vorspritzlinge mittels der Umsetzeinrichtung in die zugehörigen Formenhohlräume zum Spritzen der zweiten Komponente umgesetzt.

Die EP 1 155 802 A1 beschreibt eine Spritzgießvorrichtung mit einem Wendesystem, das zwischen einem feststehenden und einem beweglichen Formteil angeordnet ist und zur Halterung eines mittleren Formteils dient. Das mittlere Formteil ist durch eine untere und eine obere Traverse mittels Haltemitteln gehalten und um eine vertikale Achse drehbar angeordnet. Die Traversen sind an den Holmen einer Spritzgießmaschine geführt. In einer ersten Produktionsebene wird eine erste Materialkomponente in eine Kavität gespritzt, sodass ein erstes Teil entsteht. Das Teil aus der ersten Materialkomponente bleibt beim Öffnen der Form am mittleren Formteil haften und wird mit diesem durch Drehen des mittleren Formteils in die zweite Produktionsebene gebracht, wo es nach dem Schließen der Form mit einer zweiten Materialkomponente wirkverbunden wird.

Die EP 895 848 A1 zeigt eine weitere Vorrichtung mit zwei Trennebenen. Zwischen einer feststehenden und einer beweglich angeordneten Formhälfte ist ein mittleres Formteil angeordnet. Das Mittelteil ist um eine vertikale Achse um 180 Grad drehbar angeordnet und weist nur auf zwei Seiten Kavitäten auf.

Die EP 1 119 449 A1 zeigt eine Spritzgießvorrichtung mit zwei Produktionsebenen, mit einer feststehenden und einer beweglichen Formhälfte. Zwischen den beiden Formhälften ist ein Formmittelteil angeordnet, das mittels einer im Maschinenbett eingelassenen Führung einseitig gehalten und um eine Achse drehbar angeordnet ist. Sie ist ebenfalls zur Herstellung von Teilen aus mehreren Kunststoffkomponenten geeignet.

Alle diese bekannten Verfahren und Spritzgießmaschinen sind geeignet zur Verarbeitung von Kunststoffschmelzen desselben Basistyps oder von Kunststoffschmelzen unterschiedlichen Basistyps, welche bei annähernd gleichen Schmelzetemperaturen verarbeitet werden. So können beispielsweise zwei unterschiedliche Kunststoffe des Thermoplasttyps verarbeitet werden oder aber auch zwei Kunststoffe des LSR-Typs. Es ist jedoch mit den bekannten Verfahren und Vorrichtungen nicht möglich, in derselben Spritzgießmaschine ein Formteil herzustellen, welches beispielsweise aus einem Thermoplastteil besteht, an den ein weichelastischer Teil des LSR-Typs angeformt ist, da der Thermoplastkunststoff eine Heißtemperatursteuerung, der LSR-Teil jedoch eine Kalttemperatursteuerung mit einer separaten Formplattenerhitzung erforderlich macht.

Die vorliegende Erfindung stellt sich daher die Aufgabe, aufbauend auf dem bekannten Prinzip des Zweikomponentenspritzgießens ein Verfahren und eine Vorrichtung zu schaffen, mit welcher die Herstellung eines Formteils ermöglicht wird, welches aus zwei oder mehr Kunststofftypen besteht, die jeweils bei erheblich unterschiedlichen Temperaturen verarbeitet werden. So soll es möglich sein, auf eine Heißtemperaturspritzung eine Kalttemperaturspritzung folgen zu lassen oder umgekehrt. Auch soll bei mehr als zwei Einspritzstationen die Aufeinanderfolge von heiß-kalt-heiß- beziehungsweise von kalt-heiß-kalt-Temperaturführungen möglich sein.

Diese Aufgabe wird ausgehend von einem Verfahren und einer Spritzgießmasschine der eingangs genannten Gattung durch ein Verfahren zum Spritzgießen nach Anspruch 1 und eine nach diesem Verfahren arbeitende Spritzgießmaschine zum Mehrkomponentenspritzgießen nach Anspruch 5 gelöst, welche Einrichtungen zur Steuerung, Regelung und Verteilung eines Wärmeträgermediums und Einrichtungen zur Temperaturisolierung umfasst.

Mit dem erfindungsgemäßen Verfahren zum Spritzgießen und der erfindungsgemäßen Spritzgießmaschine ist es möglich, in einem kontinuierlichen Herstellungsprozess ein Formteil herzustellen, das mindestens einen Teil aus einem weichelastischen Material und mindestens einen weiteren Teil aus einem steiferen Werkstoff besitzt, wobei beide Teile des Formteils fest miteinander verbunden sind.

Außerdem liegt der Erfindung die Aufgabe zugrunde, ein entsprechendes Formteil bereitzustellen. Diese Aufgabe wird erfindungsgemäß mittels eines Formteils mit den in Anspruch 11 genannten Merkmalen gelöst.

Die Erfindung wird nachstehend anhand der Figuren näher erläutert. Darin zeigt:
- Fig. 1: einen Horizontalschnitt durch die wesentlichsten Teile einer erfindungsgemäßen Spritzgießmaschine,
- Fig. 2: den vergrößerten Ausschnitt des Anspritzbereiches für bspw. einen LSR-Kunststoff, und
- Fig. 3: den vergrößerten Ausschnitt des Anspritzbereiches für bspw. einen Thermoplast-Kunststoff.

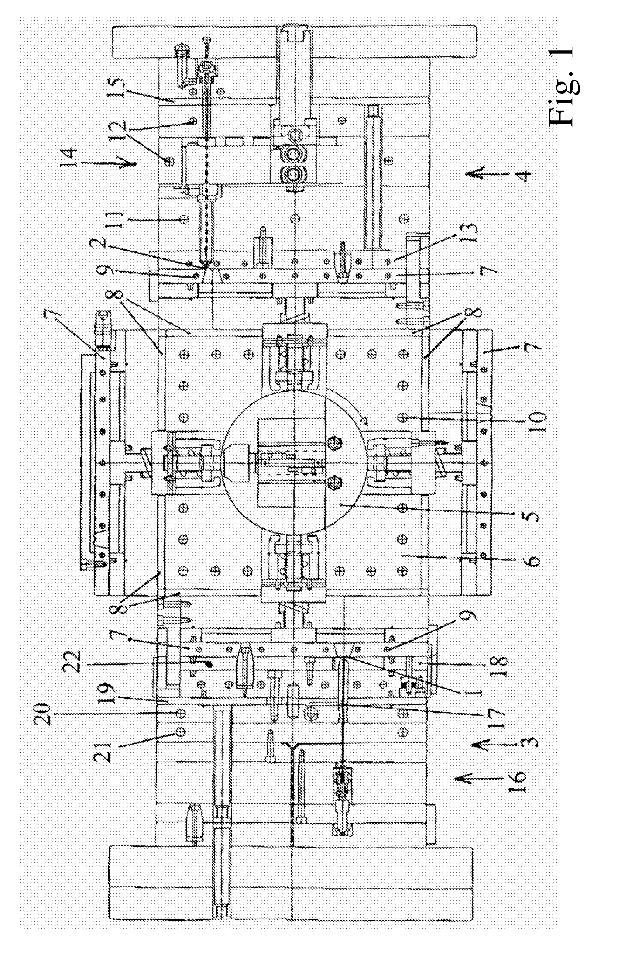

Fig. 1 zeigt hier exemplarisch eine Spritzgießmaschine mit lediglich zwei gegenüber liegenden Spritzstationen 1 und 2. Im linken Anspritzteil 3 ist der Kaltkanalspritzguss beispielsweise eines LSR-Kunststoffs, im rechten Anspritzteil 4 der Heißkanalspritzguss beispielsweise für einen thermoplastischen Kunststoff dargestellt. Zwischen diesen beiden Teilen befindet sich mittig ein horizontaler Drehtisch 5 mit einem quaderförmig ausgebildeten Träger 6 für vier identisch ausgebildete Formplatten 7.

Zwischen dem quaderförmigen Träger 6 und den vier identischen Formplatten 7 sind Isolierungen 8 angebracht, welche einen Wärmeübergang von den Formplatten 7 zum Träger 6 vermeiden. Die Formplatten 7 werden mittels eines eigenen Temperierkreises 9 auf gleichbleibender Temperatur gehalten, beispielsweise einer Temperatur von etwa 120 °C, der Träger 6 wird von einem eigenen Kühlkreis 10 beispielsweise auf einer Temperatur von etwa 20 °C gehalten.

Der Anspritzteil 4 für den Heißkanalspritzguss besitzt zwei separate Temperierkreise 11 und 12, wovon der Temperierkreis 11 für die Temperierung der aufgespannten Formplatte 13 und der Temperierkreis 12 für die Erhitzung der Plastifiziereinrichtung 14 vorgesehen ist. Beide Temperierkreise 11 und 12 können für die Verarbeitung beispielsweise von Thermoplasten auf etwa 80 °C eingestellt sein. Zwischen der Plastifiziereinrichtung 14 und den nachgeschalteten Maschinenteilen befindet sich in bekannter Weise eine weitere Isolierung 15.

Der Anspritzteil 3 für den Kaltkanalspritzguss setzt sich aus dem Zuführungsteil 16, der an das Maschinengehäuse anschließt und aus dem die Kaltkanaldüsen 17 herausragen, und der erhitzten Formplatte 18 zusammen, wobei zwischen dem Zuführungsteil 16 und der erhitzten Formplatte 18 eine Isolierung 19 vorgesehen ist, welche den Wärmeübergang von den erhitzten Formplatten 18, die bei der Verarbeitung von beispielsweise LSR-Kunststoff eine Temperatur von etwa 200 °C aufweisen, zum Zuführungsteil 16 mit einer Temperatur von etwa 20 °C bis 40 °C, hemmen. Die Kaltkanaldüsen 17 selbst besitzen einen eigenen Kühlkreislauf 20 mit etwa 20 °C. Der Zuführungsteil 16 wird von einem Kühlkreis 21 auf eine Temperatur von etwa 20 °C gekühlt, die Formplatte 18 von einem Temperierkreis 22 auf eine Temperatur von etwa 200 °C erhitzt.

Im hier dargestellten Aufbau sind zwei gegenüber liegende Anspritzteile 3 und 4 und ein quaderförmiger Teil 6 mit vier identen Formplatten 7 dargestellt. Es versteht sich jedoch von selbst, dass die Anzahl der Anspritzteile und der am mittleren Teil 6 angebrachten Formplatten 7 auch eine höhere Anzahl haben können. Weiters ist es selbstverständlich, dass bei geschlossener Spritzgussmaschine die freiliegenden Formplatten 7 für andere Bearbeitungsschritte oder für den Abwurf des Formteils genutzt werden können.

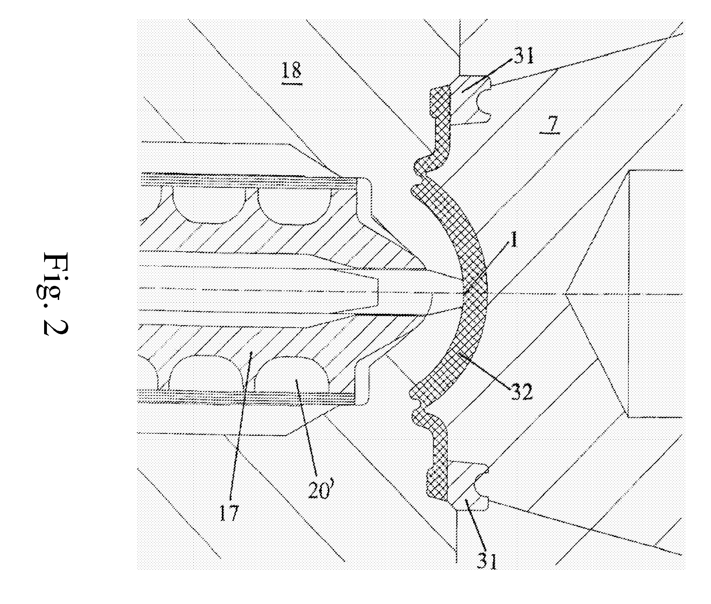

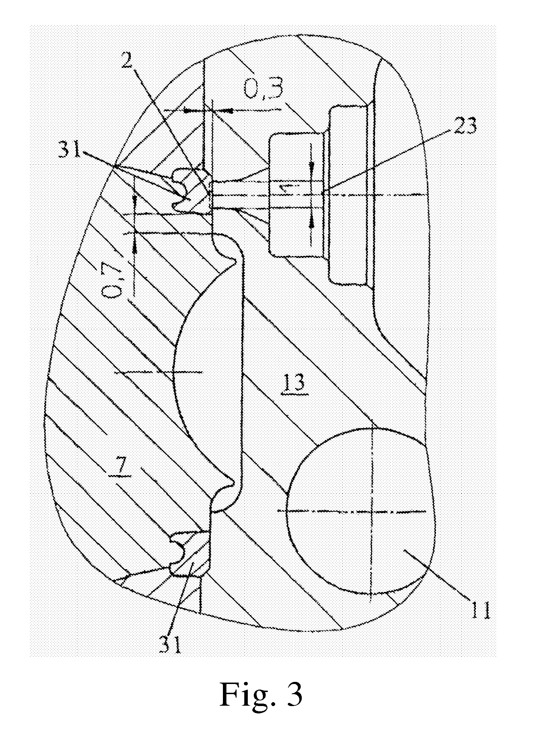

Der Herstellungsprozess beginnt, wie aus den Figuren 2 und 3 ersichtlich, beim hier dargestellten Formteil 30, einem Ventil aus Silikonwerkstoff mit einem festen Ring 31 aus einem Thermoplasten, am Anspritzteil 4. Der feste Ventilring 31 wird in die Kavität eingespritzt, welche beim Schließen der auf ~ 80 °C temperierten Formplatte 13 am Anspritzteil 4 und der auf ~ 120 °C tempertierten Formplatte 7 am Träger 6 entsteht. Sobald das Werkzeug wieder öffnet, bewegt sich die Formplatte 7 durch Drehen des horizontalen Drehtisches 5 um 90 ° nach rechts, wobei der soeben gespritzte Ventilring 31 an der Formplatte 7 haftet. Während des darauf folgenden Spritzzyklus kann der Thermoplastring 31 abkühlen und aushärten. Nach einer weiteren Drehung des Drehtisches 5 um 90 ° und schließen des Werkzeuges bildet die Formplatte 7 mit einer Temperatur von etwa 120 °C nun mit der Formplatte 18 mit einer Temperatur von ~ 200 °C des Anspritzteiles 3 eine neue Kavität, die den Ventilring 31 teilweise überlagert. Sobald der LSR-Kunststoff über die Kaltkanaldüse 17 in diese Kavität gespritzt wird, kommt der LSR-Kunststoff 32 mit dem Thermoplastring 31 in Berührung und geht mit diesem eine im Prinzip feste Verbindung ein. Gleichzeitig findet die Polymerisierung des LSR-Kunststoffs 32 statt. Nachdem das Werkzeug wieder geöffnet und der Drehtisch 5 um weitere 90 ° gedreht ist, erfolgt die Schlitzung, Bedruckung, Ionisierung oder ähnliches und der Abwurf des fertigen Formteils 30.

In Fig. 2 ist der Anspritzbereich für bspw. einen LSR-Kunststoff in vergrößertem Ausschnitt dargestellt. Die hier dargestellte, patentierte Kaltkanalspritzgussdüse 17, welche an einem Kühlreislauf 20 angeschlossen und von Kühlmedium 20' durchflossen wird, liegt in der Formplatte 18. Sobald die Formplatten 7 und 18 geschlossen sind, bilden sie zwischen sich eine Kavität, in welche der LSR-Kunststoff 32 eingespritzt wird. Dabei überdeckt der LSR-Kunststoff 32 teilweise den Thermoplastring 31 und bildet eine im Prinzip feste Verbindung aus.

In Fig. 3 ist der Anspritzbereich für beispielsweise einen Thermoplast-Kunststoff in vergrößertem Ausschnitt dargestellt. Die Anspritzdüse 23 liegt in der Formplatte 13 und wird vom Temperierkreis 11 erhitzt. In die bei geschlossenen Formplatten 7 und 13 gebildete Kavität wird beim Spritzstation 2 hier beispielsweise der Thermoplast-Kunststoff zur Ausbildung des Ventilrings 31 eingebracht.

Je nach Art der zu verarbeitenden Kunststoffe kann der Kaltbereich der Spritzgussmaschine auf einen Temperaturwert zwischen 20 °C bis 80 °C und der Heißbereich auf einen Temperaturwert zwischen 80 °C und 300 °C temperiert werden.

## Patentansprüche

1. Verfahren zum Mehrkomponenten-Spritzgießen, insbesondere zum 2-Komponenten-Spritzgießen von Kunststoff-Spritzgussteilen, bei dem aus zwei oder mehr spritzgießbaren Materialien oder Materialiengruppen in zwei oder mehr Spritzschritten in einer Spritzform bzw. einem Formnest Formteile bzw. Formteilgruppen hergestellt werden, wobei die einzelnen Spritzschritte im wesentlichen simultan in den einzelnen Spritzstationen (1, 2) ausgeführt werden, welche mit Versorgungseinrichtungen ausgestattet sind, und die entstehenden Formteile innerhalb einer Formplatte (7), welche auf einem quaderförmigen Träger (6) aufgespannt ist, relativ zu den Spritzstationen (1, 2) getaktet bewegt werden, **dadurch gekennzeichnet, dass** jeder Spritzstation (1, 2) eine separate Versorgungseinrichtung für einen bestimmten Kunststoff zugeordnet ist, und je nach zu verarbeitendem Kunststoff die Spritzstation (1) von der Versorgungseinrichtung bzw. die Versorgungseinrichtung, beispielsweise eine Plastifiziereinrichtung (14), vom Maschinengehäuse thermisch isoliert und mittels eigener Temperier- bzw. Kühlkreise (11, 12, 20, 21, 22) unterschiedlich temperiert ist, dass der quaderförmige Träger (6) von den daran aufgespannten Formplatten (7) thermisch isoliert ist, und der quaderförmige Träger (6) sowie die Formplatten (7) mittels eigener Temperier- bzw. Kühlkreise (9, 10) unterschiedlich temperiert sind, und dass in den am quaderförmigen Träger (6) aufgespannten Formplatten (7) im wesentlichen konstante Temperaturen herrschen.

2. Verfahren nach Anspruch 1, **dadurch gekennzeichnet, dass** das Verfahren zur simultanen Herstellung eines Formteils geeignet ist, welcher aus zwei oder mehr Kunststofftypen besteht, von denen zumindest einer der Gruppe der Silikone/Elastomere und zumindest ein anderer der Gruppe der Duroplaste oder der Thermoplaste zuzuordnen ist.

3. Verfahren nach Anspruch 1 oder 2, **dadurch gekennzeichnet, dass** bei zwei Spritzstationen (1, 2) auf eine Heißtemperaturspritzung eine Kalttemperaturspritzung folgt oder umgekehrt.

4. Verfahren nach Anspruch 1, 2 oder 3, **dadurch gekennzeichnet, dass** bei mehr als zwei Spritzstationen die Aufeinanderfolge von heiß-kalt-heißbeziehungsweise von kalt-heiß-kalt-Spritzungen erfolgt.

5. Spritzgießmaschine zum Mehrkomponentenspritzgießen, mit mehreren Werkzeughälften, zwischen denen Formenhohlräume ausgebildet sind, und welche auseinander fahrbar sowie schließbar sind, von denen sich eine Werkzeughälfte auf einem im wesentlichen quaderförmigen Träger (6), welcher auf einem horizontalen Drehtisch (5) montiert ist, befindet und mittels welchem die Vorspritzlinge zum Spritzen einer weiteren Komponente zu einer folgenden Werkzeughälfte oder einem folgenden Bearbeitungsschritt bzw. einer Abwurfeinheit transportiert wird, insbesondere zum Spritzgießen von Kunststoff-Spritzgussteilen nach einem Verfahren gemäß einem der Ansprüche 1 bis 4, **dadurch gekennzeichnet, dass** sie Einrichtungen zur Steuerung, Regelung und Verteilung mehrerer, voneinander thermisch getrennter und unterschiedlich temperierter Wärmeträgermedienkreisläufe (9, 10, 11 12, 20, 21, 22) zur gezielten Temperierung voneinander thermisch isolierter Bauteile (6, 7, 13, 14, 16, 17, 18) und Isolierungen (8, 15, 19) zur Temperaturisolierung von benachbarten, thermisch isolierten Bauteilen (6, 7, 13, 14, 16, 17, 18) mit unterschiedlichem Temperaturniveau besitzt.

6. Spritzgießmaschine nach Anspruch 5, **dadurch gekennzeichnet, dass** jeder Spritzstation (1, 2) eine separate Versorgungseinrichtung für einen bestimmten Kunststoff zugeordnet ist und je nach zu verarbeitendem Kunststoff die Spritzstation (1) und die ihr zugeordnete Formplatte (18) von der Versorgungseinrichtung mittels Isolierung (19) bzw. die Versorgungseinrichtung, beispielsweise eine Plastifiziereinrichtung (14) vom Maschinengehäuse mittels Isolierung (15) thermisch isoliert und mittels eigener Temperier- bzw. Kühlkreise (11, 12, 20, 21, 22) unterschiedlich temperiert ist, dass der quaderförmige Träger (6) von den daran aufgespannten Formplatten (7) mittels Isolierungen (8) thermisch isoliert ist und der quaderförmige Träger (6) sowie die Formplatten (7) mittels eigener Temperier- bzw. Kühlkreise (9, 10) unterschiedlich temperiert sind und dass in den am quaderförmigen Träger (6) aufgespannten Formplatten (7) im wesentlichen konstante Temperaturen herrschen.

7. Spritzgießmaschine nach Anspruch 5 oder 6, **dadurch gekennzeichnet, dass** am quaderförmigen Träger (6) mindestens vier identisch ausgeformte Formplatten (7) aufgespannt sind.

8. Spritzgießmaschine nach Anspruch 5, 6, oder 7, **dadurch gekennzeichnet, dass** die Formplatten (13) und (18) unterschiedlich ausgeformt sind zur Herstellung jeweils eines bestimmten Abschnitts (31, 32) des Formteils (30) und mit den Formplatten (7) die für die Herstellung der Abschnitte (31, 32) bestimmten Kavitäten bilden.

9. Spritzgießmaschine nach Anspruch 5, 6, 7 oder 8, **dadurch gekennzeichnet, dass** die Anspritzteile (3, 4) jeweils für den Spritzguss eines bestimmten Kunststofftyps, wie beispielsweise Silikone/Elastomere, Duroplaste oder Thermoplaste ausgebildet sind.

10. Spritzgießmaschine nach Anspruch 5, 6, 7, 8 oder 9, **dadurch gekennzeichnet, dass** zumindest einer Spritzstation (2) zusätzlich eine Plastifiziereinrichtung (14) für die Plastifizierung eines Polymergranulats zugeordnet ist.

11. Formteil, insbesondere hergestellt nach einem Verfahren gemäß einem der Ansprüche 1 bis 4, **dadurch gekennzeichnet, dass** es mindestens einen Abschnitt (32) aus einem weichelastischen Material und mindestens einen weiteren Abschnitt (31) aus einem steiferen Werkstoff besitzt, wobei beide Teile des Formteils (30) fest miteinander verbunden sind.

12. Formteil nach Anspruch 11, **dadurch gekennzeichnet, dass** es ein Ventil ist und aus einem Ventilring (31) aus thermoplastischem Kunststoff und einer Ventilklappe (32) aus Silikon besteht.
